# EUROPÄISCHE PATENTANMELDUNG

(11) **EP 4 389 774 A1**
(43) Veröffentlichungstag der Anmeldung: **26.06.2024**
(21) Anmeldenummer: 23204448.7
(22) Anmeldetag: 18.10.2023
(51) Int. Cl.: C08C 1/02

(54) **VERFAHREN ZUR VORZERKLEINERUNG UND REINIGUNG VON PFLANZENMATERIAL NATURKAUTSCHUKHALTIGER PFLANZEN**

(30) Priorität: 02.11.2022 DE 102022211570
(71) Anmelder: Continental Reifen Deutschland GmbH, 30175 Hannover (DE)
(72) Erfinder: Dr. Recker, Carla, 30165 Hannover (DE); Dr. Venz, Carsten, 30165 Hannover (DE); Dr. Herzog, Katharina, 30165 Hannover (DE); Behm, Frank, 30165 Hannover (DE); Janczak, Norbert, 30165 Hannover (DE); Fichtner, Clemens, 18051 Rostock (DE)
(74) Vertreter: Continental Corporation

(57) **Zusammenfassung**

Die Erfindung betrifft ein Verfahren zur Vorzerkleinerung und Reinigung von Pflanzenteilen naturkautschukhaltiger Pflanzen (1) zur späteren Verarbeitung zu Naturkautschuk (11) mit den folgenden Schritten:
a) Zuführen der wärmebehandelten Pflanzenteile naturkautschukhaltiger Pflanzen (1) mit einer ersten Fördereinheit (16) zu einer Zerkleinerungseinheit (17),
b) Vorzerkleinern der in einer wässrigen Phase Lösung befindlichen Pflanzenteilen naturkautschukhaltiger Pflanzen (1) mit der Zerkleinerungseinheit (17),
c) Zuführen der vorzerkleinerten Pflanzenteile naturkautschukhaltiger Pflanzen (1) in der wässrigen Phase Lösung zu einer Abtrennmaschine Siebmaschine (19),
d) Sieben Abtrennen der vorzerkleinerten Pflanzenteile naturkautschukhaltiger Pflanzen (1) unter Abscheidung der wässrigen Phase Lösung,
e) Fördern der vorzerkleinerten Pflanzenteile naturkautschukhaltiger Pflanzen (1) zu einer Extraktionseinheit (9).

## Beschreibung

Die Erfindung betrifft ein Verfahren zur Vorzerkleinerung und Reinigung von Pflanzenmaterial naturkautschukhaltiger Pflanzen, wobei Pflanzenmaterial naturkautschukhaltiger Pflanzen vorzerkleinert werden, von einer flüssigen Phase getrennt werden und zu einer Extraktionseinheit gefördert werden.

Weiterhin betrifft die Erfindung eine Vorkonditionierungsvorrichtung, insbesondere zum Durchführen des Verfahrens. Die Erfindung betrifft zudem vorzerkleinerte und gereinigte Pflanzenteile naturkautschukhaltiger Pflanzen.

Industriell genutzter Naturkautschuk wird überwiegend von Hevea Bäumen gewonnen. Vorliegend sollen jedoch alternative Quelle für Naturkautschuk verfügbar gemacht werden, indem Naturkautschuk aus anderen Pflanzen nutzbar gemacht wird. Bekanntermaßen gibt es weitere Pflanzenteile naturkautschukhaltiger Pflanzen, die Naturkautschuk enthalten. Um Naturkautschuk aus den Pflanzenteilen naturkautschukhaltiger Pflanzen zu gewinnen, ist der Naturkautschuk von Verschmutzungen und weiteren Pflanzenmaterialbestandteilen zu separieren.

Vor diesem Hintergrund liegt der Erfindung die Aufgabe zugrunde, ein Verfahren sowie eine Vorkonditioniervorrichtung derart auszuführen, dass in einem nachfolgenden Verfahrensschritt Naturkautschuk effizient und in hoher Qualität aus Pflanzenteilen naturkautschukhaltiger Pflanzen gewonnen werden kann.

Diese Aufgabe wird gelöst mit einem Verfahren gemäß den Merkmalen des Patentanspruches 1 und einer Vorkonditioniervorrichtung sowie durch vorzerkleinerte und gereinigte Pflanzenteile naturkautschukhaltiger Pflanzen gemäß den nebengeordneten Ansprüchen. Die Unteransprüche betreffen besonders zweckmäßige Weiterbildungen der Erfindung.

Erfindungsgemäß ist also ein Verfahren zur Vorzerkleinerung und Reinigung von Pflanzenteilen naturkautschukhaltiger Pflanzen zur späteren Verarbeitung zu Naturkautschuk mit den folgenden Schritten vorgesehen:
a) Zuführen der Pflanzenteile naturkautschukhaltiger Pflanzen mit einer ersten Fördereinheit zu einer Zerkleinerungseinheit,
b) Vorzerkleinern der in einer flüssigen Phase befindlichen Pflanzenteilen naturkautschukhaltiger Pflanzen mit der Zerkleinerungseinheit,
c) Zuführen der vorzerkleinerten Pflanzenteile naturkautschukhaltiger Pflanzen in der flüssigen Phase zu einer Abtrennmaschine,
d) Abtrennen der vorzerkleinerten Pflanzenteile naturkautschukhaltiger Pflanzen unter Abscheidung der flüssigen Phase,
e) Fördern der vorzerkleinerten Pflanzenteile naturkautschukhaltiger Pflanzen zu einer Extraktionseinheit.

Eine Zwischenlagerung der vorzerkleinerten Pflanzenteile ist vor einem jeden Verfahrensschritt möglich.

Es wurde festgestellt, dass ein Vorzerkleinern von Pflanzenteile naturkautschukhaltiger Pflanzen in einer flüssigen Phase mit einem nachfolgenden Abtrennen zum Trennen der Pflanzenteile naturkautschukhaltiger Pflanzen von der flüssigen Phase zu einer erhöhten Effizienz eines nachfolgenden Extraktionsprozesses oder Mahlprozesses führt, wobei die Qualität des gewonnenen Naturkautschuks erhöht wird. Weiterhin wird ein besonders hoher Anteil des in den Pflanzenteilen naturkautschukhaltiger Pflanzen vorhandenen Naturkautschuks gewonnen.

Es hat sich als vorteilhaft erwiesen die Pflanzenteile naturkautschukhaltiger Pflanzen vor dem Extraktionsprozess von Verschmutzungen zu trennen. Es wird im Extraktionsprozess Naturkautschuk mit einer höheren Qualität und Reinheit gewonnen.

Das Zerkleinern der Pflanzenteile naturkautschukhaltiger Pflanzen in der flüssigen Phase führt zu einem Herauslösen von Wurzelmaterialbestandteilen, die in die wässrige Phase übergehen und mittels des nachfolgenden Abtrennschrittes vom Naturkautschuk getrennt werden. Es wurde überraschend festgestellt, dass hierdurch nicht nur Wurzelbestandteile vom Naturkautschuk getrennt werden, sondern dass die Viskosität der Phase in dem nachfolgendem Extraktionsprozess verringert wird, wodurch ein besonders effektiver und schonender Extraktionsprozess ermöglicht wird.

Das Fördern in Schritt e) kann mit allen dem Fachmann bekannten aktiven Fördermitteln, wie einer Pumpe, einem Förderband oder einem Schüttler oder aber mit einem passiven Fördermittel, wie einer Rutsche ausgeführt werden.

Eine bevorzugte Ausführungsform sieht vor, dass es sich bei dem Pflanzenmaterial um Pflanzenmaterial von Pflanzen handelt, die Mitglieder der Asteraceae, wie Taraxacum sp. oder Scorzonera sp., insbesondere Taraxacum kok-saghyz, Taraxacum krim-saghyz, Taraxacum bicorne, Taraxacum brevicorniculatum, oder Scorzonera tau-saghyz, Scorzonera Uzbekistanica, Scorzonera teke-saghyz, Scorzonera hispanica, Scorzonera tausaghyz, oder Guayule (Parthenium argentatum), oder auch andere Spezies wie Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense, oder Silphium sp., oder Mischungen dieser Pflanzen sowie natürlich vorkommende oder gezüchtete Hybride der vorgenannten Spezies Hybride mit mindestens einer der vorgenannten Spezies sind, wobei als Hybride alle Ausprägungsformen mischerbiger Pflanzen anzusehen sind. Diese Pflanzen haben sich als besonders geeignet zur Gewinnung von Naturkautschuk erwiesen.

Eine weitere bevorzugte Ausführungsform sieht vor, dass die Pflanzenteile naturkautschukhaltiger Pflanzen vorbehandelt sind, insbesondere zum Koagulieren des Naturkautschuks, wobei das Koagulieren bevorzugt durch eine geeignete Lagerung und beziehungsweise oder eine chemische Behandlung und beziehungsweise oder eine Wärmebehandlung erzeugt wird. Es hat sich als vorteilhaft erwiesen, dass ein Vorbehandeln der Pflanzenteile naturkautschukhaltiger Pflanzen vor einem Vorzerkleinern zu einer effektiveren Trennung des Naturkautschuks von den weiteren Bestandteilen der Pflanzenteile naturkautschukhaltiger Pflanzen führt. Dies wird auf eine Veränderung der Eigenschaften der weiteren Bestandteile der Pflanzenteile naturkautschukhaltiger Pflanzen zurückgeführt, da diese dadurch ein geeigneteres Verfahrensergebnis zum Trennen nach dem Vorzerkleinerungsschritt aufweisen. Die weiteren Bestandteile der Pflanzenteile naturkautschukhaltiger Pflanzen weisen also abweichende Eigenschaften nach dem Vorzerkleinern auf, wenn diese vorbehandelt wurden. Weiterhin kann der Naturkautschuk selbst in seinen Eigenschaften verändert werden. Hierbei hat sich ein Koagulieren des Naturkautschuk als besonders geeignete Maßnahme erwiesen, da hierdurch die Eigenschaften des Naturkautschuks erheblich verändert werden. Insbesondere werden Agglomerationen erzeugt, die ein Abscheiden des Naturkautschuks begünstigen. Zum Koagulieren haben sich verschiedene Arten der Lagerung sowie auch chemische Behandlungen als vorteilhaft erwiesen. Als besonders vorteilhaft aus Verfahrenssicht und auch vom Verfahrensergebnis her hat sich eine Wärmebehandlung herausgestellt.

Eine Wärmebehandlung ist ein Verfahren, bei dem die Pflanzenteile naturkautschukhaltiger Pflanzen für eine bestimmte Dauer auf einen vorgegebenen Temperaturbereich temperiert werden. Die Temperatur beträgt hierbei zumindest 50 °C bevorzugt jedoch zumindest 70 °C und weiter bevorzugt zumindest 90 °C. Eine Temperatur von 140 °C wird bevorzugt nicht überschritten, wobei weiter bevorzugt eine Temperatur von 110° nicht überschritten wird. Mögliche Verfahren sind beispielweise das Kochen bei Atmosphärendruck oder ein Prozessieren in einem Autoklaven oder aber eine Wärmebehandlung bei trockener Umgebung.

Eine weitere bevorzugte Ausführungsform sieht vor, dass das Wärmebehandeln ein Kochen beinhaltet und bevorzugt ein Kochen ist. Es zeigte sich überraschenderweise, dass eine Wärmebehandlung der Pflanzenteile naturkautschukhaltiger Pflanzen in einer wässrigen Phase vor dem Vorzerkleinern der Pflanzenteile naturkautschukhaltiger Pflanzen zu einem besonders effektiven Extraktionsprozess und einer besonders hohen Naturkautschukqualität führt. Unter Kochen wird eine Wärmebehandlung in einer wässrigen Phase bei zumindest 50 °C verstanden.

Eine weitere bevorzugte Ausführungsform sieht vor, dass in Schritt a) die Pflanzenteile naturkautschukhaltiger Pflanzen und unabhängig von den Pflanzenteilen naturkautschukhaltiger Pflanzen Prozesswasser oder Frischwasser zu der Zerkleinerungseinheit gefördert wird. Das unabhängige Fördern von Prozesswasser oder Frischwasser ermöglicht ein einfaches Fördern der Pflanzenteile naturkautschukhaltiger Pflanzen beispielsweise mit einem Förderband, wobei die Zerkleinerungseinheit die Pflanzenteile naturkautschukhaltiger Pflanzen in einer wässrigen Phase so zerkleinert, dass sich in der wässrigen Phase kautschukarme Pflanzenteile anreichern, während sich der Kautschuk in der festen Phase anreichert. Das Mischungsverhältnis von den Pflanzenteilen naturkautschukhaltiger Pflanzen zum Prozesswasser oder Frischwasser kann während des Verfahrens angepasst werden.

Eine weitere bevorzugte Ausführungsform sieht vor, dass die Fördereinheit in Schritt a) ein Förderband ist und bevorzugt kontinuierlich die Pflanzenteile naturkautschukhaltiger Pflanzen fördert. Mit einem Förderband können die Pflanzenteile naturkautschukhaltiger Pflanzen in einfacher Weise sowie vereinzelt gefördert werden. Insbesondere ist mit einem Förderband in einfacher Form ein kontinuierlicher Strom an Pflanzenteilen naturkautschukhaltiger Pflanzen förderbar.

Die Zerkleinerung kann durch alle dem Fachmann bekannten Zerkleinerungsverfahren abgebildet werden. Bevorzugt sind dabei Verfahren, die durch scherende und beziehungsweise oder quetschende Beanspruchung die Zerkleinerung bewirken. Der Zerkleinerungsschritt kann ein- oder mehrstufig ausgeführt sein.

Eine weitere bevorzugte Ausführungsform sieht vor, dass die Zerkleinerungseinheit eine Exzenterschneckenpumpe ist. Überraschend wurde festgestellt, dass eine Vorzerkleinerung der Pflanzenteile naturkautschukhaltiger Pflanzen durch eine Quetsch- und beziehungsweise oder Scherbeanspruchung im Allgemeinen und insbesondere durch Quetsch- und beziehungsweise oder eine Scherbeanspruchung, die durch eine Exzenterschneckenpumpe auf die Pflanzenteile naturkautschukhaltiger Pflanzen in einer wässrigen Phase aufgebracht wird, die Pflanzenteile naturkautschukhaltiger Pflanzen effektiv vorzerkleinert, wobei die Qualität des Naturkautschuks nicht oder nur geringfügig vermindert wird. Ein nachfolgender Extraktionsprozess findet besonders effektiv statt, so dass Naturkautschuk in besonders schonender Weise vom weiteren Wurzelmaterial getrennt werden kann. Der Aufbau der Exzenterschneckenpumpe gewährleistet ein Verfahren, in dem das Wurzelmaterial einer hinsichtlich der Dauer und der Intensität besonders gleichmäßigen Scherbeanspruchung ausgesetzt wird.

Zur Abtrennung können alle dem Fachmann bekannten Trennverfahren zur Fest-Flüssig-Trennung eingesetzt werden.

Eine weitere bevorzugte Ausführungsform sieht vor, dass es sich bei der Abtrennmaschine um eine Siebmaschine handelt, besonders bevorzugt um eine Trommelsiebmaschine ist, die die Pflanzenteile naturkautschukhaltiger Pflanzen mit Prozesswasser oder Frischwasser spült. Eine Abtrennmaschine trennt in einer effektiven und schonenden Art die flüssigen und abwaschbaren Bestandteile vom weiteren Pflanzenmaterial und ermöglicht bevorzugt eine gleichmäßige Spülung des Wurzelmaterials in der Trommelsiebmaschine.

Eine weitere bevorzugte Ausführungsform sieht vor, dass das Fördern in Schritt e) der vorzerkleinerten Pflanzenteile naturkautschukhaltiger Pflanzen mit einer Exzenterschneckenpumpe durchgeführt wird. Durch das Fördern der Pflanzenteile naturkautschukhaltiger Pflanzen in eine Extraktionseinheit mittels einer Exzenterschneckenpumpe kann eine weitere Scherbeanspruchung auf die Pflanzenteile naturkautschukhaltiger Pflanzen aufgebracht werden. Diese Scherbeanspruchung kann in ihrer Höhe und ihrer Dauer von der vorhergehenden Scherbeanspruchung abweichen. Aufgrund der bereits herausgetrennten und ausgespülten Bestandteile des Wurzelmaterials und des gegebenenfalls abweichenden Verhältnisses von Wurzelmaterial zu Wasser, kann ein weiterer Zerkleinerungseffekt erreicht werden, der im vorhergehenden Zerkleinerungsschritt so nicht erzeugt werden kann.

Eine weitere bevorzugte Ausführungsform sieht vor, dass der Zerkleinerungseinheit zumindest das 1 ,5-fache bevorzugt das 2-fache und weiter bevorzugt das 2,5-fache an Prozesswasser oder Frischwasser im Verhältnis zu den Pflanzenteilen naturkautschukhaltiger Pflanzen zugeführt wird. Durch einen hohen Anteil von Prozesswasser oder Frischwasser kann eine gewünscht niedrige Viskosität erreicht werden. Weiterhin wird sichergestellt, dass aus den Pflanzenteilen naturkautschukhaltiger Pflanzen gelöste Bestandteile in die flüssige Phase übergehen und beim Abtrennen vom Naturkautschuk getrennt werden.

Eine weitere bevorzugte Ausführungsform sieht vor, dass die Schritte a), b), c) und d) in der genannten Reihenfolge durchgeführt werden, wobei anschließend an Schritt d) die Schritte c) und d) und bevorzugt der Schritt b) und weiter bevorzugt der Schritt a) wiederholt durchgeführt werden. Durch ein Wiederholen der genannten Schritte wird ein weiteres Aufreinigen des Naturkautschuks erreicht.

Erfindungsgemäß ist eine Vorkonditionierungsvorrichtung zur Vorzerkleinerung und Reinigung von Pflanzenteilen naturkautschukhaltiger Pflanzen, bevorzugt zum Ausführen des erfindungsgemäßen Verfahrens vorgesehen, aufweisend eine erste Fördereinheit zum Fördern der Pflanzenteile naturkautschukhaltiger Pflanzen zu einer Zerkleinerungseinheit, eine Zerkleinerungseinheit zum Vorzerkleinern der Pflanzenteile naturkautschukhaltiger Pflanzen, eine Abtrennmaschine zum Abtrennen der Pflanzenteile naturkautschukhaltiger Pflanzen sowie eine zweite Fördereinheit.

Eine Vorkonditionierungsvorrichtung zur Vorzerkleinerung von Pflanzenteilen naturkautschukhaltiger Pflanzen in einer wässrigen Phase mit einem nachfolgenden Abtrennen zum Trennen der Pflanzenteile naturkautschukhaltiger Pflanzen von der wässrigen Phase führt zu einer erhöhten Effizienz eines nachfolgenden Mahlprozesses, wobei die Qualität des gewonnenen Naturkautschuks erhöht wird.

Die erste Fördereinheit kann mit allen dem Fachmann bekannten aktiven Fördermitteln, wie einer Pumpe, einem Förderband oder einem Schüttler oder aber mit einem passiven Fördermittel, wie einer Rutsche ausgeführt werden.

Eine weitere bevorzugte Ausführungsform sieht vor, dass die erste Fördereinheit ein Förderband ist. Das Förderband ermöglicht in einfacher Weise die Pflanzenteile naturkautschukhaltiger Pflanzen vereinzelt zu fördern. Insbesondere ist mit einem Förderband in einfacher Form ein kontinuierlicher Strom an Pflanzenteilen naturkautschukhaltiger Pflanzen förderbar.

Die Zerkleinerungseinheit kann durch alle dem Fachmann bekannten Zerkleinerungsvorrichtungen ausgebildet werden. Bevorzugt sind dabei Vorrichtungen, die durch scherende Beanspruchung die Zerkleinerung bewirken. Es können mehrere Vorrichtungen zur Zerkleinerung nacheinander angeordnet sein.

Eine weitere bevorzugte Ausführungsform sieht vor, dass die Zerkleinerungseinheit eine Exzenterschneckenpumpe ist. Eine Vorzerkleinerung der Pflanzenteile naturkautschukhaltiger Pflanzen durch eine Scherbeanspruchung, die durch eine Exzenterschneckenpumpe auf die Pflanzenteile naturkautschukhaltiger Pflanzen in einer wässrigen Phase aufgebracht wird, zerkleinert die Pflanzenteile naturkautschukhaltiger Pflanzen effektiv, wobei die Qualität des Naturkautschuks nicht oder nur geringfügig vermindert wird. Ein nachfolgender Extraktionsprozess findet besonders effektiv statt, so dass Naturkautschuk in besonders schonender Weise vom weiteren Wurzelmaterial getrennt werden kann.

Zur Abtrennung können alle dem Fachmann bekannten Trennvorrichtungen zur Fest-Flüssig-Trennung verwendet werden.

Eine weitere bevorzugte Ausführungsform sieht vor, dass es sich bei der Abtrennmaschine um eine Siebmaschine handelt, besonders bevorzugt um eine Trommelsiebmaschine, bevorzugt mit Spülvorrichtung. Eine Siebmaschine, insbesondere eine Trommelsiebmaschine, trennt in einer effektiven und schonenden Art die flüssigen Bestandteile vom weiteren Pflanzenmaterial und ermöglicht bevorzugt eine gleichmäßige Spülung der Pflanzenteile naturkautschukhaltiger Pflanzen in der Siebmaschine.

Erfindungsgemäß sind vorzerkleinerte und gereinigte Pflanzenteile naturkautschukhaltiger Pflanzen vorzerkleinert und gereinigt durch ein erfindungsgemäßes Verfahren und bevorzugt vorzerkleinert und gereinigt mit einer erfindungsgemäßen Vorkonditionierungsvorrichtung vorgesehen. Extrahierter Naturkautschuk hergestellt aus mit dem erfindungsgemäßen Verfahren vorzerkleinertem und gereinigtem Naturkautschuk, insbesondere mit einer erfindungsgemäßen Vorkonditionierungsvorrichtung, weist eine besonders hohe Reinheit und eine besonders hohe Qualität auf. Das Extrahieren des Naturkautschuks aus dem Wurzelmaterial kann nach der erfindungsgemäßen Vorzerkleinerung und Reinigung besonders schonend für den Naturkautschuk erfolgen, wodurch eine hohe Qualität sowie eine hohe Ausbeute des Naturkautschuks ermöglicht werden.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigt in
Fig. 1 eine Darstellung eines Kautschukgewinnungsverfahrens mit vor- und nachgelagerten Prozessschritten;
Fig. 2 eine Darstellung eines Vorzerkleinerungs- und Reinigungsverfahrens von Pflanzenteilen naturkautschukhaltiger Pflanzen;
Fig. 3 eine Darstellung einer Vorkonditionierungsvorrichtung zur Vorzerkleinerung und Reinigung von Pflanzenteilen naturkautschukhaltiger Pflanzen.

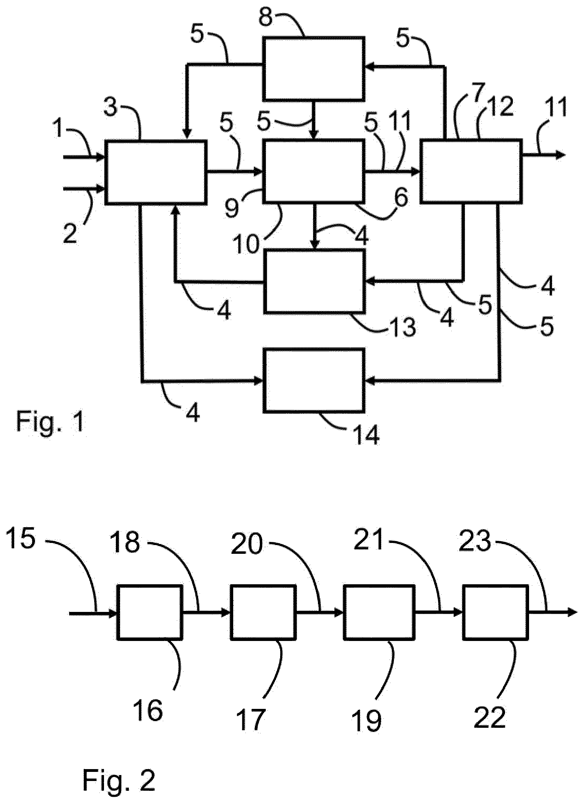

Figur 1 zeigt eine Darstellung des Kautschukgewinnungsverfahrens aus Löwenzahn mit vor- und nachgelagerten Prozessschritten. Pflanzenteile naturkautschukhaltiger Pflanzen 1, hier Frischwurzeln des Löwenzahns und Frischwasser 2 werden in einem ersten Verfahrensschritt einer Vorkonditionierungsvorrichtung 3 zugeführt. Die Pflanzenteile naturkautschukhaltiger Pflanzen 1 werden in der Vorkonditionierungsvorrichtung 3 durch das Frischwasser 2 gereinigt und vorkonditioniert. Weiterhin kann der Vorkonditionierungsvorrichtung 3 aufbereitetes Prozesswasser 4 zugeführt werden sowie Wurzelmaterial 5, das bereits einmal einen Extraktionsschritt 6 durchlaufen hat und folgend in einem Separationsschritt 7 separiert und einem Materialpuffer 8 zwischengespeichert wurde.

Nach der Vorkonditionierung wird das Pflanzenmaterial 5 einer Extraktionseinheit 9 zugeführt. In der Extraktionseinheit 9, die als Kugelmühle 10 ausgeführt ist, wird das Pflanzenmaterial 5 weiter zerkleinert. Es werden die Pflanzenbestandteile voneinander gelöst, wobei insbesondere Naturkautschuk 11 vom restlichen Pflanzenmaterial 5 gelöst wird. Hierzu wird der Kugelmühle 10 Frischwasser 2 oder Prozesswasser 4 zugeführt. Das Pflanzenmaterial 5 und der Naturkautschuk 11 werden folgend auf den Extraktionsschritt 6 zu einer Separationseinheit 12 gefördert. Die Separationseinheit 12 trennt den Naturkautschuk 11 von den weiteren Bestandteilen des Pflanzenmaterials, dem weiteren Pflanzenmaterial 5. Das weitere Pflanzenmaterial 5 wird zum Teil mit dem Prozesswasser 4 einer Wasseraufbereitung 13 zugeführt und von dieser in Prozesswasser 4 und Reststoffe separiert. Das Prozesswasser 4 kann der Vorkonditionierungsvorrichtung 3 zugeführt werden. Der Wasseraufbereitung 13 kann Prozesswasser 4 aus der Extraktionseinheit 9 zugeführt werden.

Ein zweiter Teil des weiteren Pflanzenmaterials 5 und des Prozesswassers 4 aus der Separationseinheit 12 wird einer Entsorgungseinheit 14 zugeführt. Der Entsorgungseinheit 14 wird weiterhin Prozesswasser 4 aus der Vorkonditionierungsvorrichtung 3 zugeführt.

Ein dritter Teil des weiteren Pflanzenmaterials 5 aus der Separationseinheit 12 kann dem Materialpuffer 8 zugeführt werden und kann von dort in die Vorkonditionierungsvorrichtung 3 oder in die Extraktionseinheit 9 weiterbefördert werden.

In Figur 2 ist ein Vorzerkleinerungs- und Reinigungsverfahren von Pflanzenteilen naturkautschukhaltiger Pflanzen 1 dargestellt. Das Verfahren sieht in einem ersten Schritt 15 das Zuführen von wärmebehandelten Pflanzenteilen naturkautschukhaltiger Pflanzen 1 mit einer ersten Fördereinheit 16, das als ein Förderband ausgeführt ist, vor. Das Förderband fördert die Pflanzenteile naturkautschukhaltiger Pflanzen 1 aus einem Zwischenspeicher zu einer Zerkleinerungseinheit 17, die als eine Exzenterschneckenpumpe ausgeführt ist. Die feuchten Pflanzenteile naturkautschukhaltiger Pflanzen 1 werden eingangsseitig der Zerkleinerungseinheit 17 zusätzlich mit Prozesswasser 4 vermengt, so dass ein Gemisch aus Pflanzenteilen naturkautschukhaltiger Pflanzen 1 mit Prozesswasser 4 entsteht.

In einem zweiten Schritt 18 werden die Pflanzenteile naturkautschukhaltiger Pflanzen 1 mit der Zerkleinerungseinheit 17 durch Aufbringen von Scherkräften auf die Pflanzenteile naturkautschukhaltiger Pflanzen 1 geschert und dabei in einer geeigneten Weise vorzerkleinert. Die Pflanzenteile naturkautschukhaltiger Pflanzen 1 werden mit dem Prozesswasser 4 einem konstanten Volumenstrom durch die Exzenterschneckenpumpe gefördert, sodass die Pflanzenteile naturkautschukhaltiger Pflanzen 1 stets gleichermaßen den Scherkräften ausgesetzt werden.

In einem dritten Schritt 20 werden die Pflanzenteile naturkautschukhaltiger Pflanzen 1 und das Prozesswasser 4 einer Abtrennmaschine 19 zugeführt in dem die Pflanzenteile naturkautschukhaltiger Pflanzen 1 in einem vierten Schritt 21 vom Prozesswasser 4 getrennt wird. Für einen weiteren Reinigungseffekt werden die Pflanzenteile naturkautschukhaltiger Pflanzen 1 mit gereinigtem Prozesswasser 4 zusätzlich gespült. Mit einer zweiten Fördereinheit 22 werden die vorzerkleinerten und gereinigten Pflanzenteile naturkautschukhaltiger Pflanzen 1 in einem fünften Schritt 23 einer Extraktionseinheit 9 zugeführt.

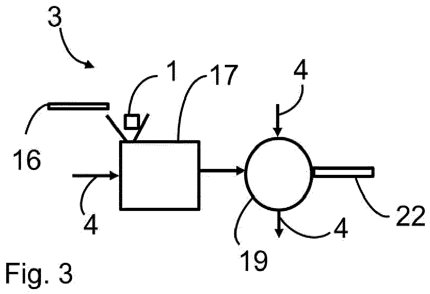

In Figur 3 ist eine Vorkonditionierungsvorrichtung 3 zur Vorzerkleinerung und Reinigung von Pflanzenteilen naturkautschukhaltiger Pflanzen 1 dargestellt. Die Vorkonditionierungsvorrichtung 3 weist eine erste Fördereinheit 16 auf, die als ein Förderband realisiert ist. Das Förderband fördert die Pflanzenteile naturkautschukhaltiger Pflanzen 1 in eine Zerkleinerungseinheit 17, die als Exzenterschneckenpumpe ausgeführt ist. Der Exzenterschneckenpumpe wird weiterhin Prozesswasser 4 zugeführt, das mit den Pflanzenteilen naturkautschukhaltiger Pflanzen 1 vermengt wird. Das Prozesswasser 4 mit den Pflanzenteilen naturkautschukhaltiger Pflanzen 1 werden unter einer Scherbeanspruchung durch die Exzenterschneckenpumpe in eine Abtrennmaschine 19 gefördert. Die Abtrennmaschine 19 trennt das Prozesswasser 4 von den Pflanzenteilen naturkautschukhaltiger Pflanzen 1 und spült die Pflanzenteile naturkautschukhaltiger Pflanzen 1 mit gereinigtem Prozesswasser 4. Die Pflanzenteile naturkautschukhaltiger Pflanzen 1 werden entlang der Abtrennmaschine 19, die als ein Trommelsieb ausgeführt ist, gefördert und gelangt zu einer zweiten Fördereinheit 22, die als eine Exzenterschneckenpumpe ausgeführt sein kann und die Pflanzenteile naturkautschukhaltiger Pflanzen 1 einer weiteren Scherbeanspruchung aussetzt. Die zweite Fördereinheit 22 kann alternativ als passives Fördermittel beispielsweise als eine Rutsche ausgeführt sein. Die zweite Fördereinheit 22 befördert die Pflanzenteile naturkautschukhaltiger Pflanzen 1 zu einer Extraktionseinheit 9.

### Bezugszeichenliste

- 1: Pflanzenteile naturkautschukhaltiger Pflanzen
- 2: Frischwasser
- 3: Vorkonditionierungsvorrichtung
- 4: Prozesswasser
- 5: Pflanzenmaterial

- 6: Extraktionsschritt
- 7: Separationsschritt
- 8: Materialpuffer
- 9: Extraktionseinheit
- 10: Kugelmühle

- 11: Naturkautschuk
- 12: Separationseinheit
- 13: Wasseraufbereitung
- 14: Entsorgungseinheit
- 15: erster Schritt

- 16: erste Fördereinheit
- 17: Zerkleinerungseinheit
- 18: zweiter Schritt
- 19: Abtrennmaschine
- 20: dritter schritt

- 21: vierter Schritt
- 22: zweite Fördereinheit
- 23: fünfte Schritt

## Patentansprüche

1. Verfahren zur Vorzerkleinerung und Reinigung von Pflanzenteilen naturkautschukhaltiger Pflanzen (1) zur späteren Verarbeitung zu Naturkautschuk (11) mit den folgenden Schritten:
a) Zuführen der Pflanzenteile naturkautschukhaltiger Pflanzen (1) mit einer ersten Fördereinheit (16) zu einer Zerkleinerungseinheit (17),
b) Vorzerkleinern der in einer wässrigen Phase befindlichen Pflanzenteilen naturkautschukhaltiger Pflanzen (1) mit der Zerkleinerungseinheit (17),
c) Zuführen der vorzerkleinerten Pflanzenteile naturkautschukhaltiger Pflanzen (1) in der wässrigen Phase zu einer Abtrennmaschine (19),
d) Abtrennen der vorzerkleinerten Pflanzenteile naturkautschukhaltiger Pflanzen (1) unter Abscheidung der wässrigen Phase,
e) Fördern der vorzerkleinerten Pflanzenteile naturkautschukhaltiger Pflanzen (1) zu einer Extraktionseinheit (9).

2. Verfahren nach Anspruch 1, **dadurch gekennzeichnet, dass** es sich bei dem Naturkautschuk (11) aus Pflanzenteilen naturkautschukhaltiger Pflanzen von Pflanzen handelt, die Mitglieder der Asteraceae, wie Taraxacum sp. oder Scorzonera sp., insbesondere Taraxacum kok-saghyz, Taraxacum krim-saghyz, Taraxacum bicorne, Taraxacum brevicorniculatum, oder Scorzonera tau-saghyz, Scorzonera Uzbekistanica, Scorzonera teke-saghyz, Scorzonera hispanica, Scorzonera tausaghyz, oder Guayule (Parthenium argentatum), oder auch andere Spezies wie Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense, oder Silphium sp., oder Mischungen dieser Pflanzen sowie natürlich vorkommende oder gezüchtete Hybride mit mindestens einer der vorgenannten Spezies sind, wobei als Hybride alle Ausprägungsformen mischerbiger Pflanzen anzusehen sind.

3. Verfahren nach Anspruch 1 oder 2, **dadurch gekennzeichnet, dass** die Pflanzenteile naturkautschukhaltiger Pflanzen (1) vorbehandelt werden, insbesondere zum Koagulieren des Naturkautschuks (11), wobei das Koagulieren bevorzugt durch eine geeignete Lagerung und/oder eine chemische Behandlung und/oder eine Wärmebehandlung erzeugt wird.

4. Verfahren nach einem der vorangehenden Ansprüche, **dadurch gekennzeichnet, dass** das die Pflanzenteile naturkautschukhaltiger Pflanzen (1) vorbehandelt werden, insbesondere zum Erweichen von Wurzelbestandteilen, wobei das Erweichen der Wurzelbestandteile bevorzugt durch eine Wärmebehandlung erzeugt wird.

5. Verfahren nach einem der vorangehenden Ansprüche, **dadurch gekennzeichnet, dass** das Wärmebehandeln der Pflanzenteile naturkautschukhaltiger Pflanzen (1) mit heißem Wasser oder Dampf erfolgt, bevorzugt ein Kochen ist.

6. Verfahren nach einem der vorangehenden Ansprüche, **dadurch gekennzeichnet, dass** in Schritt a) die Pflanzenteile naturkautschukhaltiger Pflanzen (1) und unabhängig von den Pflanzenteilen naturkautschukhaltiger Pflanzen (1) Prozesswasser (4) oder Frischwasser (2) zu der Zerkleinerungseinheit (17) gefördert wird.

7. Verfahren nach einem der vorhergehenden Ansprüche, **dadurch gekennzeichnet, dass** die erste Fördereinheit (16) in Schritt a) ein Förderband ist und bevorzugt kontinuierlich die Pflanzenteile naturkautschukhaltiger Pflanzen (1) fördert.

8. Verfahren nach einem der vorangehenden Ansprüche, **dadurch gekennzeichnet, dass** die Zerkleinerungseinheit (17) eine Exzenterschneckenpumpe ist.

9. Verfahren nach einem der vorangehenden Ansprüche, **dadurch gekennzeichnet, dass** die Abtrennmaschine (19) eine Siebmaschine und bevorzugt eine Trommelsiebmaschine ist, die die Pflanzenteile naturkautschukhaltiger Pflanzen (1) bevorzugt mit Prozesswasser (4) oder Frischwasser (2) spült.

10. Verfahren nach einem der vorangehenden Ansprüche, **dadurch gekennzeichnet, dass** das Fördern in Schritt e) der vorzerkleinerten Pflanzenteile naturkautschukhaltiger Pflanzen (1) mit einer Exzenterschneckenpumpe durchgeführt wird.

11. Verfahren nach einem der vorangehenden Ansprüche, **dadurch gekennzeichnet, dass** der Zerkleinerungseinheit (17) zumindest das 1,5-fache bevorzugt das 2-fache und weiter bevorzugt das 2,5-fache an Prozesswasser (4) oder Frischwasser (2) im Verhältnis zu den Pflanzenteilen naturkautschukhaltiger Pflanzen (1) zugeführt wird.

12. Verfahren nach einem der vorangehenden Ansprüche, **dadurch gekennzeichnet, dass** die Schritte a), b), c) und d) in der genannten Reihenfolge durchgeführt werden, wobei anschließend an Schritt d) die Schritte c) und d) und bevorzugt der Schritt b) und weiter bevorzugt der Schritt a) wiederholt durchgeführt werden.

13. Vorkonditionierungsvorrichtung (3) zur Vorzerkleinerung und Reinigung von Pflanzenteilen naturkautschukhaltiger Pflanzen (1), bevorzugt zum Ausführen des Verfahrens nach einem der Ansprüche 1 bis 12, aufweisend eine erste Fördereinheit (16) zum Fördern der Pflanzenteile naturkautschukhaltiger Pflanzen (1) zu einer Zerkleinerungseinheit (17), eine Zerkleinerungseinheit (17) zum Zerkleinern der Pflanzenteile naturkautschukhaltiger Pflanzen (1), eine Abtrennmaschine (19) zum Abtrennen der Pflanzenteile naturkautschukhaltiger Pflanzen (1) sowie eine zweite Fördereinheit (22).

14. Vorkonditionierungsvorrichtung nach Anspruch 13, **dadurch gekennzeichnet, dass** die erste Fördereinheit (22) ein Förderband ist.

15. Vorkonditionierungsvorrichtung nach einem der Ansprüche 13 bis 14, **dadurch gekennzeichnet, dass** die Zerkleinerungseinheit (17) eine Exzenterschneckenpumpe ist.

16. Vorkonditionierungsvorrichtung nach einem der Ansprüche 13 bis 15, **dadurch gekennzeichnet, dass** die Abtrennmaschine (19) eine Siebmaschine und bevorzugt eine Trommelsiebmaschine, bevorzugt mit Spülvorrichtung, ist.

17. Vorzerkleinerte und gereinigte Pflanzenteile naturkautschukhaltiger Pflanzen (1) zur späteren Verarbeitung zu Naturkautschuk (11) vorzerkleinert und gereinigt durch ein Verfahren nach einem der Ansprüche 1 bis 12 und bevorzugt vorzerkleinert und gereinigt mit einer Vorkonditionierungsvorrichtung (3) nach einem der Ansprüche 13 bis 16.
